# EUROPEAN PATENT APPLICATION

(11) **EP 4 699 847 A1**
(43) Date of publication of application: **25.02.2026**
(21) Application number: 25196279.1
(22) Date of filing: 15.08.2025
(51) Int. Cl.: B60L 3/12, B60L 53/16, B60L 53/18, B60L 53/30, B60L 53/62, B60L 53/66, B60L 55/00, H02J 7/00, H02J 7/34, H02J 7/47, H02J 7/70, H02J 105/37

(54) **SYSTEMS AND METHODS FOR DIRECT VEHICLE TO VEHICLE CHARGING**

(30) Priority: 19.08.2024 US 202463684772 P; 20.08.2024 US 202463685256 P; 29.07.2025 US 202519283239
(71) Applicant: Daimler Truck AG, 70771 Leinfelden-Echterdingen (DE)
(72) Inventor: BANSOD, Ashish Baban, Portland, 97217 (US); VIJAYARAGHAVAN, Sathish, Portland, 97217 (US); VEDULA, Sashank Mani, Portland, 97217 (US)
(74) Representative: Keltie LLP

(57) **Abstract**

The various implementations described herein include methods and devices for vehicle-to-vehicle charging. In one aspect, a system includes a charge acceptor vehicle, a charge donor vehicle, and a cable having a first connector and a second connector. The first connector is configured to trigger a request to establish an electrical connection with the battery of the charge acceptor vehicle in response to a determination that the second connector is plugged into a charging port of the charge donor vehicle. The second connector is configured to automatically establish an electrical connection to the battery of the charge donor vehicle. The cable is configured to support charge transfer from the battery of the charge donor vehicle to the battery of the charge acceptor vehicle. Details regarding the cable and a method of transferring charge between two vehicles are also disclosed.

## Description

### TECHNICAL FIELD

The disclosed implementations relate generally to vehicle charging and more specifically to systems and methods of implementing vehicle-to-vehicle charging.

### BACKGROUND

Electrical vehicles (EVs) are becoming more prevalent as a mode of transportation. However, the infrastructure to support the operation of EVs has not grown as rapidly as the popularity of EVs. Presently, EVs are commonly charged at private charging stations (e.g., at a home, office, apartment building, or retailer) or at public charging stations that are available to the public (e.g., at public city parking lots). Just as conventional vehicles need to refuel with gasoline to continue operation, EVs need to regularly recharge their batteries to remain operational. Thus, there is a need to provide accessible charging for EVs.

### SUMMARY

As the popularity of EVs grows, so does the demand for accessible methods of charging EVs. Conventionally, vehicles are refueled at designated locations, such as a gas station, a charging station located in a parking lot, or a personal charging station installed at a home. With the growing demand for EVs comes the need for highly accessible charging options for EVs. An apparatus and method for charging EVs is provided here, where EVs can transmit and receive charge from each other. This is referred to as vehicle-to-vehicle charging or V2V charging.

In accordance with some implementations, a method of transferring charge between a first vehicle and a second vehicle is performed at the first vehicle. The method includes detecting a first proximity resistance value corresponding to a first connector located at a first end of a cable. The cable also includes a distinct second connector located at a distinct second end of the cable. The second connector is configured to electrically couple the cable to a charging port of the second vehicle. The method also includes, in response to detecting the first proximity resistance value and in response to determining that the second end of the cable is connected to the second vehicle via the second connector, sending a request to a controller in the first vehicle to close a charging contact of the first vehicle. The method further includes, in response receiving the request to close the charging contact, closing the charging contact, thereby establishing an electrical connection between the battery of the first vehicle and the battery of the second vehicle. The method also includes automatically detecting the nominal voltage of the second vehicle and determining whether the nominal voltage of the second vehicle is within a predetermined voltage range for the first vehicle. The method further includes, in response to a determination that the nominal voltage of the second vehicle is within the predetermined voltage range for the first vehicle: (i) initiating charge transfer from the second vehicle to the first vehicle; and (ii) storing charge received from the battery of the second vehicle at the battery of the first vehicle.

In accordance with some implementations, a cable configured for transmitting charge between a first vehicle and a second vehicle includes a first connector at a first end of the cable and a second connector at a second end of the cable. The first connector has a first proximity resistance value and is configured to electrically couple the cable to a charging port of the first vehicle, the second connector has a second proximity resistance value that is different from the first proximity resistance value, and the second connector is configured to electrically couple the cable to a charging port of the second vehicle. The first connector is configured to trigger a request to establish an electrical connection to the battery of the first vehicle in response to a determination that the second connector is plugged into a charging port of the second vehicle. The second connector is configured to automatically establish an electrical connection to a battery of the second vehicle in response to a determination that the second connector is plugged into a charging port of the second vehicle. The cable is configured to support charge transfer from the second end of the cable to the first end of the cable.

In accordance with some implementations, a system configured for transmitting charge between charge donor vehicles and charge acceptor vehicles includes a charge acceptor vehicle, a charge donor vehicle that is distinct from the charge acceptor vehicle, and a cable having a first connector at a first end of the cable and a second connector at a second end of the cable. The first connector is configured to trigger a request to establish an electrical connection with the battery of the charge acceptor vehicle in response to a determination that the second connector is plugged into a charging port of the charge donor vehicle. The second connector is configured to automatically establish an electrical connection to the battery of the charge donor vehicle in response to a determination that the second connector is plugged into a charging port of the charge donor vehicle. The cable is configured to support charge transfer from the battery of the charge donor vehicle to the battery of the charge acceptor vehicle.

In accordance with some implementations, a method is performed at a computing device that is part of a first vehicle. The computing device includes memory and one or more processors. The method includes detecting, at a controller, a first proximity resistance value at a charging port of the first vehicle. The first proximity resistance value corresponds to a first connector located at a first end of a cable. The cable further includes a distinct second connector located at a distinct second end of the cable. The second connector is configured to electrically couple the cable to a charging port of a second vehicle that is distinct from the first vehicle. The method further includes, in response to detecting the first proximity resistance value and in response to determining that the second end of the cable is connected to the second vehicle via the second connector, closing, by the controller, a charging contact of the first vehicle, thereby establishing an electrical connection between the battery of the first vehicle and the battery of the second vehicle. The method also includes automatically detecting, by the controller, the nominal voltage of the second vehicle. The method determines, by the controller, whether the nominal voltage of the second vehicle is within a predetermined voltage range for the first vehicle. The method further includes, in response to a determination that the nominal voltage of the second vehicle is within the predetermined voltage range for the first vehicle: (i) initiating a charge transfer process from the second vehicle to the first vehicle and (ii) storing charge received from the battery of the second vehicle at the battery of the first vehicle.

In accordance with some implementations, a computing device that is part of a first vehicle includes one or more processors, memory, and one or more programs stored in the memory and configured for execution by the one or more processors. The one or more programs include instructions for detecting, at a controller, a first proximity resistance value at a charging port of the first vehicle. The first proximity resistance value corresponds to a first connector located at a first end of a cable. The cable further includes a distinct second connector located at a distinct second end of the cable and the second connector is configured to electrically couple the cable to a charging port of a second vehicle that is distinct from the first vehicle. The one or more programs also include instructions for, in response to detecting the first proximity resistance value and in response to determining that the second end of the cable is connected to the second vehicle via the second connector, closing, by the controller, a charging contact of the first vehicle, thereby establishing an electrical connection between the battery of the first vehicle and the battery of the second vehicle. The one or more programs further include instructions for automatically detecting, by the controller, the nominal voltage of the second vehicle, and determining, by the controller, whether the nominal voltage of the second vehicle is within a predetermined voltage range for the first vehicle. The one or more programs also include instructions for, in response to a determination that the nominal voltage of the second vehicle is within the predetermined voltage range for the first vehicle: (i) initiating a charge transfer process from the second vehicle to the first vehicle and (ii) storing charge received from the battery of the second vehicle at the battery of the first vehicle.

In accordance with some implementations, a non-transitory computer-readable storage medium stores one or more programs configured for execution by a computing device that is part of a first vehicle. The computing device includes one or more processors and memory, and the one or more programs comprise instructions for detecting, at a controller, a first proximity resistance value at a charging port of the first vehicle. The first proximity resistance value corresponds to a first connector located at a first end of a cable. The cable further includes a distinct second connector located at a distinct second end of the cable and the second connector is configured to electrically couple the cable to a charging port of a second vehicle that is distinct from the first vehicle. The one or more programs also include instructions for, in response to detecting the first proximity resistance value and in response to determining that the second end of the cable is connected to the second vehicle via the second connector, closing, by the controller, a charging contact of the first vehicle, thereby establishing an electrical connection between the battery of the first vehicle and the battery of the second vehicle. The one or more programs further include instructions for automatically detecting, by the controller, the nominal voltage of the second vehicle, and determining, by the controller, whether the nominal voltage of the second vehicle is within a predetermined voltage range for the first vehicle. The one or more programs also include instructions for, in response to a determination that the nominal voltage of the second vehicle is within the predetermined voltage range for the first vehicle: (i) initiating a charge transfer process from the second vehicle to the first vehicle and (ii) storing charge received from the battery of the second vehicle at the battery of the first vehicle.

In various circumstances, the vehicle charging apparatus (e.g., charging cable) and methods of the present disclosure have the following advantages over conventional EV charging systems. First, in accordance with some implementations, the disclosed vehicle charging apparatus and methods allow for charging to occur between two electric vehicles, thereby enabling a compatible EV that is also enabled to provide a discharge service to act as a mobile charging station (in addition to conventional stationary charging stations). This increases the accessibility of charging opportunities by providing more options for a charging source since compatible EVs that can provide a discharge service can now be considered as a charge source. This also improves the range of travel for an EV, since EVs can utilize a vehicle-to-vehicle charging scheme to increase the amount of charge enough to get to a stationary charging point. In a first example, a charge donor EV may be used as a charge source to provide charging to other EVs. This charge donor EV may periodically return to a stationary source to recharge itself and may travel to the locations of other EVs for on-demand charging. In another example, a first EV may not have enough charge to travel to a charging station. In such cases, a second EV may be able to provide the first EV with enough charge for the first EV to reach a stationary charging station. The implementations described above are just two examples in which the vehicle-to-vehicle charging apparatus and methods disclosed herein can be utilized. As the needs and uses for EVs evolve, so will the ways in which new charging technologies such as the one disclosed herein are used.

Thus, methods and systems are disclosed for vehicle-to-vehicle charging. Such methods and systems may complement or replace conventional methods and systems of charging EVs.

### BRIEF DESCRIPTION OF THE DRAWINGS

For a better understanding of the aforementioned systems, methods, and apparatus that provide vehicle-to-vehicle charging, reference should be made to the Description of Implementations below, in conjunction with the following drawings in which like reference numerals refer to corresponding parts throughout the figures.
Figure 1A illustrates an example of a vehicle-to-vehicle charging system in accordance with some implementations.
Figures 1B - 1F illustrate an example of a vehicle-to-vehicle charging process utilizing the charging system shown in Figure 1A in accordance with some implementations.
Figure 2 is a block diagram of a computing device of a vehicle in accordance with some implementations.
Figures 3A and 3B provide a flowchart of a method for vehicle-to-vehicle charging in accordance with some implementations.
Figures 4A and 4B provide a flowchart of a method for vehicle-to-vehicle charging in accordance with some implementations.

Reference will now be made to implementations, examples of which are illustrated in the accompanying drawings. In the following description, numerous specific details are set forth in order to provide a thorough understanding of the present invention. However, it will be apparent to one of ordinary skill in the art that the present invention may be practiced without requiring these specific details.

### DESCRIPTION OF IMPLEMENTATIONS

A vehicle-to-vehicle charging system of the present disclosure allows for charge transfer (also referred to as power transfer, electricity transfer, or electrical charge transfer) to be conducted between two compatible EVs with little to no human intervention. In accordance with some implementations, the charging apparatus includes a cable that facilitates information and charge transfer between the two electric vehicles (also referred to herein as EVs). The apparatus and method described herein may complement or replace conventional EV charging schemes.

An EV refers to any vehicle that can operate (e.g., provide power to) its powertrain using electricity and/or any vehicle that can receive charge (e.g., electricity) to power the vehicle's powertrain. Thus, the term EV refers to any of: an electric-only vehicle (e.g., one that does not utilize other fuel sources such as gasoline or hydrogen), a hybrid vehicle (e.g., one that may utilize other fuel sources in addition to electricity), as well as a vehicle that can receive charge (e.g., electricity) to power the vehicle's powertrain (regardless of what other type of power source(s) the vehicle can utilize to enable its powertrain).

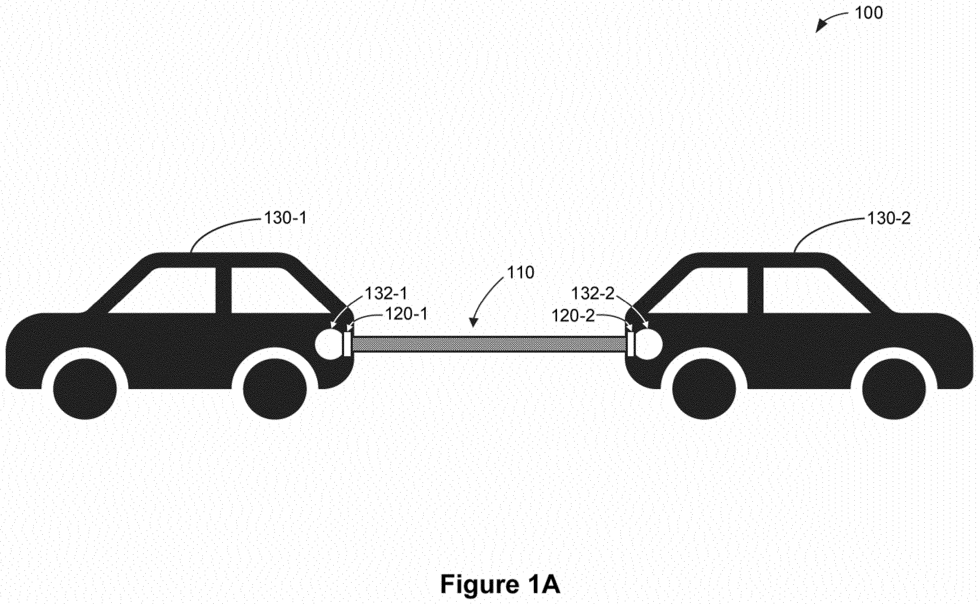

Figure 1A - 1F illustrate an example of a vehicle-to-vehicle charging system in accordance with some implementations. Vehicle-to-vehicle charging refers to a process of discharging power (e.g., discharging electricity) from the battery of a charge donor vehicle and transmitting the discharged power from the charge donor vehicle to a charge acceptor vehicle to charge the battery used by the powertrain of the charge acceptor vehicle. In some implementations, the power is discharged from a battery that is used for the powertrain of the charge donor vehicle.

The vehicle-to-vehicle charging system 100 includes a vehicle-to-vehicle charging cable 110 (also referred to herein as the charging cable 110 or the cable 110) that has a charge acceptor connector 120-1 located at a first end of the charging cable 110, and a charge donor connector 120-2 that is located at the second end of the charging cable 110. The charge donor connector 120-2 is physically distinct from the charge acceptor connector 120-1 and has a different electrical architecture from the charge acceptor connector 120-1. The second end of the charging cable 110 is distinct from the first end of the charging cable 110. The charge acceptor connector 120-1 is configured to establish an electrical connection with a charge acceptor vehicle 130-1 via a charging port of the charge acceptor vehicle 130-1 and the charge donor connector 120-2 is configured to establish an electrical connection with a charge donor vehicle 130-2 via a charging port of the charge donor vehicle 130-2. The charge donor vehicle 130-2 is distinct from the charge acceptor vehicle 130-1.

The charging cable 110 includes one or more electrical connections (e.g., wires or electrical harnesses, illustrated in Figure 1A as a thin solid line) that connects the charge acceptor connector 120-1 to the charge donor connector 120-2. Thus, the charging cable 110 is configured to establish an electrical connection between the charge acceptor vehicle 130-1 (via the charge acceptor connector 120-1) to the charge donor vehicle 130-2 (via the charge donor connector 120-2). For example, as shown in Figure 1A, when the charging cable 110 is connected to (e.g., plugged into) a charging port 132-1 of the charge acceptor vehicle 130-1 (e.g., via the charge acceptor connector 120-1) and a charging port 132-2 of the charge donor vehicle 130-2 (e.g., via the charge donor connector 120-2), the charging cable 110 is configured to connect the charge acceptor vehicle 130-1 to the charge donor vehicle 130-2 so that electricity (e.g., charge, electrical charge, or power) can be transferred between the charge donor vehicle 130-2 and the charge acceptor vehicle 130-1.

In some implementations, the charging cable 110 also includes one or more electrical connections (e.g., wires or electrical harnesses) that can provide a communication connection between the charge acceptor vehicle 130-1 and the charge donor vehicle 130-2. For example, as shown in Figure 1A, the charging cable 110, when the charging cable 110 is connected to (e.g., plugged into) the charging port 132-1 of the charge acceptor vehicle 130-1 (e.g., via the charge acceptor connector 120-1) and the charging port 132-2 of the charge donor vehicle 130-2 (e.g., via the charge donor connector 120-2), the charging cable 110 is configured to connect the charge acceptor vehicle 130-1 to the charge donor vehicle 130-2 so that the charge acceptor vehicle 130-1 and the charge donor vehicle 130-2 can communicate (e.g., transmit, share information, or exchange information) with one another.

The one or more electrical connections (e.g., wires or electrical harnesses) in the charging cable 110 include an electrical connection between a first battery 150-1, which can enable the powertrain of the charge acceptor vehicle 130-1 (e.g., the power generation battery 150-1 that provides power to the powertrain of the charge acceptor vehicle 130-1), and a second battery 150-2, which can enable the powertrain of the charge donor vehicle 130-2 (e.g., the power generation battery 150-2 that provides power to the powertrain of the charge donor vehicle 130-2), so that charge can be transferred (e.g., exchanged) between the battery 150-2 of the charge donor vehicle 130-2 and the battery 150-1 of the charge acceptor vehicle 130-1. In some implementations, the first battery 150-1 is a high voltage battery (e.g., having a voltage that greater than or equal to any of 100V, 200V, 400V, and 800V). In some implementations, the second battery 150-2 is a high voltage battery (e.g., having a voltage that greater than or equal to any of 100V, 200V, 400V, and 800V).

In some implementations, the one or more electrical connections (e.g., wires or electrical harnesses) in the charging cable 110 can support communication and information exchange between the two vehicles 130-1 and 130-2. In some implementations, the one or more electrical connections in the charging cable 110 include an electrical connection between the electric vehicle communication controller 140-1 (also referred to herein as EVCC) of the charge acceptor vehicle 130-1 and the EVCC 140-2 of the charge donor vehicle 130-2.

The charging cable 110 is asymmetric so that the charge acceptor connector 120-1 has a different electrical architecture than the charge donor connector 120-2. The charge acceptor connector 120-1 has a first proximity resistance value and the charge donor connector 120-2 has a second proximity resistance value that is distinct (e.g., having a different resistance value in Ohms) from the first proximity resistance value. The asymmetric architecture allows the two vehicles 130-1 and 130-2 to automatically (e.g., without human intervention, without additional user action) perform any handshakes or information exchange as part of a charge transfer process.

In some implementations, the charging cable 110 utilizes custom proximity resistance values at each of the charge acceptor connector 120-1 and the charge donor connector 120-2. These custom proximity resistance values differ from standard proximity resistance values that are commonly used (as set by industry standards) for communication between an EV and another device (e.g., another EV or a charging station): 100 ohms, 220 ohms, 680 ohms, and 1,500 ohms. In some implementations, the charge acceptor connector 120-1 has a first proximity resistance value and the charge donor connector 120-2 has a second proximity resistance value that is different from the first proximity resistance value. In such cases, an EV (such as the vehicles 130-1 and 130-2) can discern whether it is engaging in a vehicle-to-vehicle charging process as a charge acceptor vehicle or a charge donor vehicle based on the proximity resistance value detected (e.g., read) when the connector (120-1 or 120-2) is plugged into a charging port of the EV.

For example, based on the proximity resistance value detected by the vehicle (e.g., by an EVCC 140), the vehicle (e.g., a computer system or a controller 160 of the vehicle) may execute a set of instructions based on the detected proximity resistance value.

In some implementations, the charge acceptor vehicle 130-1 and the charge donor vehicle 130-2 are manufactured by the same manufacturer. In some implementations, the charge acceptor vehicle 130-1 has a different make and/or model from the charge donor vehicle 130-2. In some implementations, the charge acceptor vehicle 130-1 and the charge donor vehicle 130-2 have a same make and/or model.

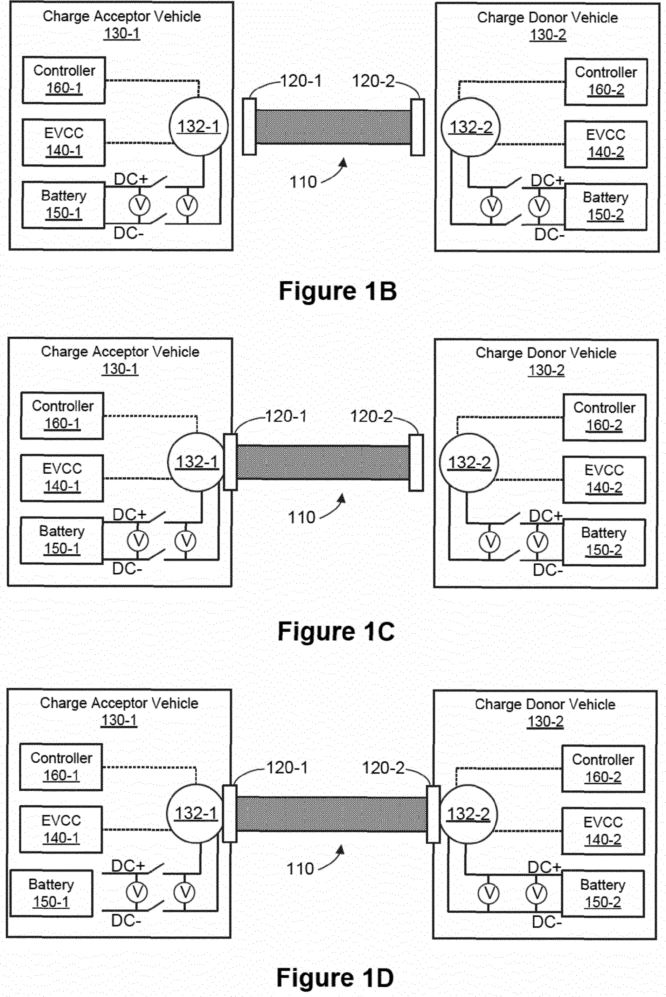

Prior to plugging the cable 110 into a charging port of a vehicle, the vehicle is agnostic or ignorant as to whether it will engage in a charge transfer process as a charge donor vehicle or as a charge acceptor vehicle. In order for a vehicle to successfully engage in the charge transfer process described below with respect to Figures 1B - 1F, 2, 3A, and 3B, the vehicle must be configured to detect or recognize at least one of the first proximity resistance value and the second proximity resistance value. Such a vehicle is configured to, in response to detecting the first proximity resistance value at the charging port of the vehicle, execute a charge acceptor protocol that is part of the charge transfer process. Similarly, the vehicle is configured to, in response to detecting the second proximity resistance value at the charging port of the vehicle, execute a charge donor protocol that is part of the charge transfer process. The charge acceptor protocol is distinct from (e.g., includes different steps from or includes additional steps to) the charge donor protocol. In some implementations, the EVCC of the vehicle is responsible for detecting the proximity resistance value at the charging port of the vehicle and sending a request to a computing system of the vehicle to execute a charge transfer process as either a charge donor vehicle or as a charge acceptor vehicle depending on the detected proximity resistance value.

In some implementations, a controller 160 of a vehicle executes a charge transfer process (executing either a charge acceptor protocol or a charge donor protocol) in response to the detected proximity resistance value. Non-limited examples of the controller 160 include a computer system, an electronic control unit, and a central power train controller.

Figures 1B - 1F illustrate an example of a vehicle-to-vehicle charging process utilizing the charging system 100 shown in Figure 1A in accordance with some implementations.

Figure 1B illustrates some of the electrical connections within the charge acceptor vehicle 130-1 and the charge donor vehicle 130-2 prior to plugging the cable 110 into either of the vehicles. As shown, each vehicle's charging contact (e.g., switch) is in the open position, meaning that an electrical circuit from the respective vehicle's battery to the respective vehicle's charging port is open and thus will not allow electricity to flow. For example, the charging contact on the charge acceptor vehicle 130-1 is open and thus, the battery 150-1 is not electrically connected to the charging port 132-1 of the charge acceptor vehicle 130-1. While this charging contact is open, the charging port 132-1 is not able to transmit electricity to or from the battery 150-1 of the charge acceptor vehicle 130-1 regardless of whether a charging cable is plugged into the charging port 132-1. At this point in time, neither vehicle is identified as either a charge acceptor vehicle or a charge donor vehicle (e.g., they are simply two distinct vehicles).

Figure 1C illustrates some of the electrical connections within the charge acceptor vehicle 130-1 and the charge donor vehicle 130-2 after the cable 110 is plugged into the charge acceptor vehicle 130-1 (e.g., via the charging port 132-1) and prior to the charging cable 110 being connected to the charge donor vehicle 130-2 (e.g., via the charging port 132-2). Once the charge acceptor connector 120-1 is plugged into the charging port 132-1 of the charge acceptor vehicle 130-1, the charge acceptor vehicle 130-1 begins executing a charge acceptor protocol. Part of the charge acceptor protocol includes waiting until the charge acceptor vehicle 130-1 can confirm that the cable 110 is also plugged into another vehicle (e.g., via the charge donor connector 120-2) before closing its charging contacts and thereby closing the electrical circuit between the battery 150-1 and the charging port 132-1. Once the charge acceptor connector 120-1 is plugged into the charging port 132-1 of the charge acceptor vehicle 130-1 and the charging contacts are closed on the charge donor vehicle 130-2, the controller 160-1 of the charge acceptor vehicle 130-1 monitors (e.g., measures) the voltage at the charge donor connector 120-2. While the charging contact of the charge acceptor vehicle 130-1 is open and while the second end of the cable 110 is not plugged into another vehicle, the controller 160-1 measures a "reflected voltage" that is equal to (e.g., substantially equal to or with negligible loss) to the voltage output through the cable 110 from the charge acceptor vehicle 130-1. As shown, the charging contact of both the charge acceptor vehicle 130-1 and the charge donor vehicle 130-2 remain in the open position since the other end of the cable 110 (e.g., the end of the cable 110 having the charge donor connector 120-2) is not yet plugged into another vehicle.

Figure 1D illustrates some of the electrical connections within the charge acceptor vehicle 130-1 and the charge donor vehicle 130-2 after the cable 110 is plugged into both the charge acceptor vehicle 130-1 (e.g., via the charging port 132-1) and the charge donor vehicle 130-2 (e.g., via the charging port 132-2). Once the charge donor connector 120-2 is plugged into the charging port 132-2 of the charge donor vehicle 130-2, the charge donor vehicle 130-2 begins executing a charge donor protocol. In some implementations, the charge donor protocol includes automatically disengaging an isolation monitoring device at the charge donor vehicle 130-2 and automatically closing the charging contact at the charge donor vehicle 130-2 in response to detecting that the charge donor connector 120-2 (having the second proximity resistance value) is plugged into the charging port 132-2 so that the charging contact at the charge donor vehicle 130-2 is always closed when the charge donor connector 120-2 is plugged into the charging port 132-2. As shown, the charging contact of the charge acceptor vehicle 130-1 remains in the open position, but the charging contact of the charge donor vehicle 130-2 is closed, thereby forming a closed circuit between the battery 150-2 and the charging port 132-2.

Once the charge donor connector 120-2 is plugged into the charging port 132-2 of the charge donor vehicle 130-2, a voltage that is measured across the proximity resistance at the charge acceptor connector 120-1 (which is being monitored by the controller 160-1 of the charge acceptor vehicle 130-1) changes. This voltage is different from the high voltage electricity output from the high voltage battery of the vehicle. A change in the voltage measured across the proximity resistance is an indication to the controller 160-1 of the charge acceptor vehicle 130-1 that the other end of the cable 110 (e.g., the end of the cable 110 having the charge donor connector 120-2) is now connected to another vehicle (e.g., charge donor vehicle 130-2). In response to the controller 160-1 of the charge acceptor vehicle 130-1 detecting the voltage change at the charge acceptor connector 120-1, the charge acceptor vehicle 130-1 checks for compatibility between the charge acceptor vehicle 130-1 and the charge donor vehicle 130-2 to ensure that a charge transfer process can be safely conducted.

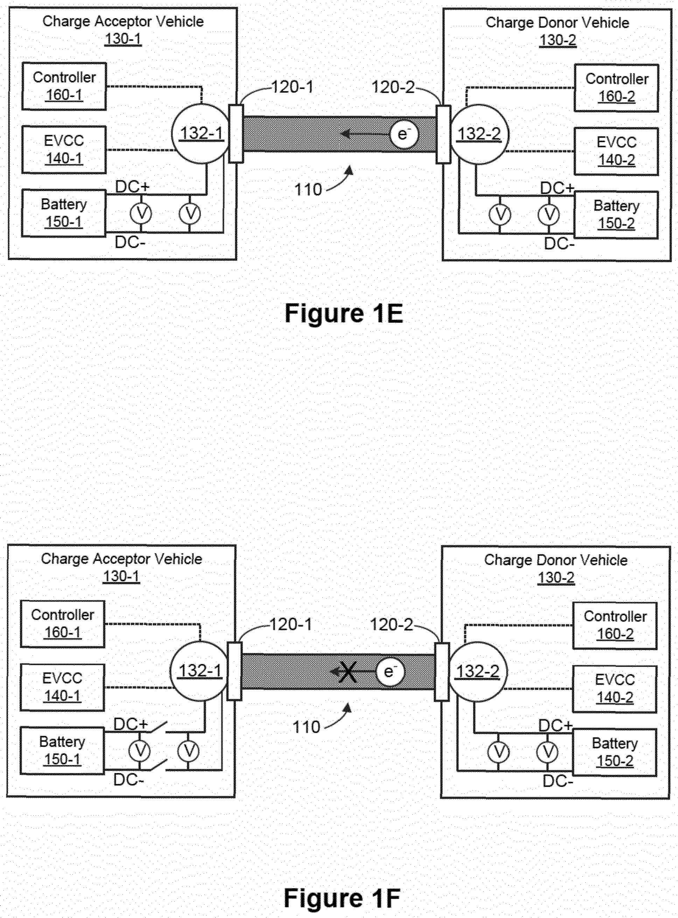

One of the requirements for compatibility is a requirement for the voltage (e.g., actual voltage, operating voltage, or nominal voltage) of the charge donor vehicle 130-2 to be within an acceptable voltage range of the charge acceptor vehicle 130-1. The charge acceptor vehicle 130-1 detects (e.g., reads) the voltage (e.g., the actual voltage, the operating voltage, or the nominal voltage) of the battery 150-2 of the charge donor vehicle 130-2 and verifies that the voltage (e.g., the nominal voltage) of the battery 150-2 of the charge donor vehicle 130-2 is within an acceptable voltage range for the charge acceptor vehicle 130-1. In response to a determination that the voltage (e.g., the actual voltage, the operating voltage, or the nominal voltage) of the battery 150-2 of the charge donor vehicle 130-2 is within an acceptable voltage range for the charge acceptor vehicle 130-1, the controller 160-1 of the charge acceptor vehicle 130-1 disengages an isolation monitoring device at the charge acceptor vehicle 130-1 and closes the charging contact at the charge acceptor vehicle 130-1. As shown in Figure 1E, the electrical circuit between the batteries 150-1 and 150-2 is closed and charge transfer between the two vehicles 130-1 and 130-2 can begin. The cable 110 is configured to facilitate this charge transfer process from the battery 150-2 of the charge donor vehicle 130-2 to the battery of the charge acceptor vehicle 130-1 by transporting charge (i.e., power, electricity, or electrons) from the charge donor connector 120-2 to the charge acceptor connector 120-1.

In some implementations, the nominal voltage of a battery refers to a state voltage class as indicated by a manufacturer of the battery or electric vehicle having the battery, a designed operating voltage as indicated by a manufacturer of the battery or electric vehicle having the battery, or a standard reference voltage value as indicated by a manufacturer of the battery or electric vehicle having the battery. In some implementations, the nominal voltage of an electric vehicle refers to a state voltage class as indicated by a manufacturer of the electric vehicle, a designed operating voltage as indicated by a manufacturer of the electric vehicle, or a standard reference voltage value as indicated by a manufacturer of the electric vehicle.

During the charge transfer process, the controller 160-1 of the charge acceptor vehicle 130-1 monitors (e.g., measures or detects) the current (e.g., in amperes) of the charge being transferred from the battery 150-2 of the charge donor vehicle 130-2 to the battery 150-1 of the charge acceptor vehicle 130-1. In response to detecting that the current is below a threshold current value (e.g., a safety current threshold value), the controller 160-1 terminates the charge transfer process by opening the charging contact at the charge acceptor vehicle 130-1. Figure 1F illustrates terminating the charge transfer process by opening the charging contact at the charge acceptor vehicle 130-1.

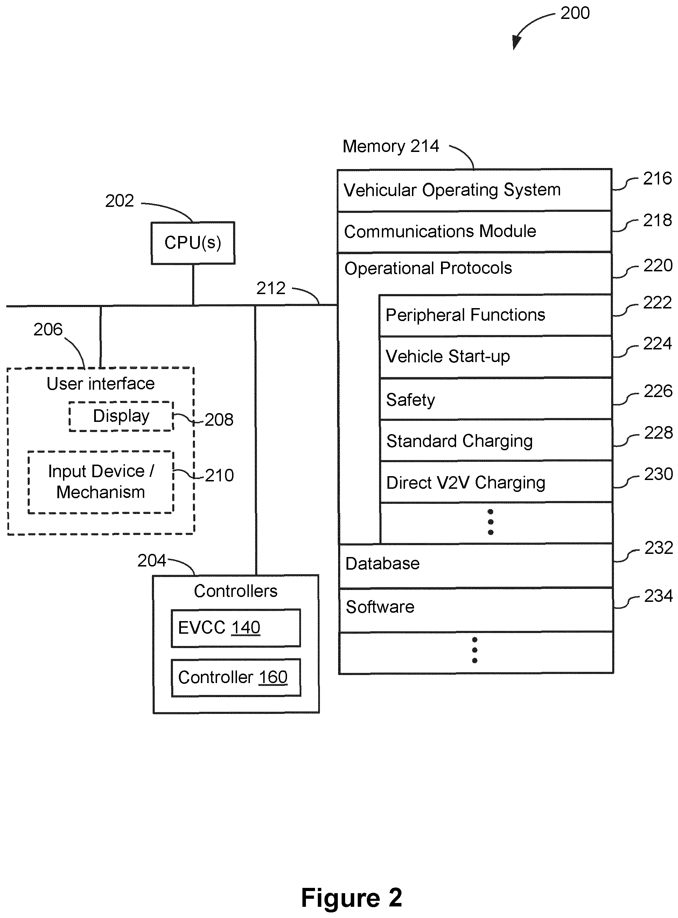

Figure 2 is a block diagram of a computing device 200 of a vehicle (such as vehicle 130-1 and/or vehicle 130-2 shown in Figures 1A - 1F) in accordance with some implementations. For example, the computing device 200 may be an on-board computer (e.g., a computer on-board the vehicle) that has a processor capable of performing one or more charge functionalities associated with the charge transfer process. The computing device 200 typically includes one or more processing units/cores (also referred to as CPUs, electronic control units (ECUs), or central power train controllers) 202 for executing modules, programs, and/or instructions stored in the memory 214 and thereby performing processing operations; one or more network or other communications interfaces that are configured to communicate with other controllers 204 (including but not limited to the EVCC 140 and the controller 160); memory 214; and one or more communication buses 212 for interconnecting these components. The communication buses 212 may include circuitry that interconnects and controls communications between system components of the vehicle.

In some implementations, the computing device 200 includes a user interface 206 comprising a display device 208 and one or more input devices or mechanisms 210. For example, the display device may include a dashboard display or an on-board screen (e.g., a screen mounted in the cabin of the vehicle). For example, the input device/mechanism may include physical and/or digital (e.g., display or "soft) buttons and/or dials. For example, digital buttons or dials can be displayed as needed on the display device 208, enabling a user to "press keys" that appear on the display 208 or provide gestures in response to display user interface elements that appear on the display 208. In some implementations, the display 208 and input device / mechanism 210 comprise a touch screen display (also called a touch sensitive display).

In some implementations, the memory 214 includes high-speed random-access memory, such as DRAM, SRAM, DDR RAM or other random-access solid-state memory devices. In some implementations, the memory 214 includes non-volatile memory, such as one or more magnetic disk storage devices, optical disk storage devices, flash memory devices, or other non-volatile solid state storage devices. In some implementations, the memory 214 includes one or more storage devices remotely located from the CPU(s) 202. The memory 214, or alternatively the non-volatile memory device(s) within the memory 214, comprises a non-transitory computer-readable storage medium. In some implementations, the memory 214, or the computer-readable storage medium of the memory 214, stores the following programs, modules, and data structures, or a subset thereof:
- a vehicular operating system 216, which includes procedures for handling various basic system services and for performing hardware dependent tasks. For example, a vehicular operating system 216 may improve safety through advanced driver assistances systems (ADAS, such as cruise control or lane assist), and may support additional features such as navigation, in-car entertainment (e.g., radio), and connectivity to other devices (e.g., Apple car play);
- a communications module 218, which is used for connecting the computing device 200 to other computers and devices via the one or more communication network interfaces (wired or wireless) and one or more communication networks, such as the Internet, other wide area networks, local area networks, and so on;
- operational protocols 220, which perform functions vital to the vehicle's performance and functionality. Operational protocols may include, and are not limited to, protocols related to:
   ∘ peripheral functions 222, such as functionality of cabin lights, head lamps, displays, car seat position adjustments;
   ∘ vehicle start-up functions 224 such as engaging a vehicle's battery to power the vehicle's power train;
   ∘ safety functions 226 such as safety checks at vehicle start-up, during vehicle operation (e.g., driving, idling), before and during charging;
   ∘ standard charging functions 228 such as connecting with a public or private charging station to charge the vehicle's battery; and
   ∘ direct vehicle-to-vehicle charging functions 230 such as performing charge transfer processes including executing charge donor protocols and/or charge acceptor protocols as described above with respect to Figures 1B - 1F;
- one or more databases 232, which store data and parameters used by the vehicular operating system 216 and/or the operational protocols 220.
- one or more programs or software 234 that are related to the functionality of the vehicle.
For example, the programs may include software for a vehicle, including protocols to enable the vehicle to engage in direct vehicle-to-vehicle charging functions 230.

Each of the above identified executable operational protocols or sets of processes may be stored in one or more of the previously mentioned memory devices, and corresponds to a set of instructions for performing a function described above. The above identified operational protocols or programs (i.e., sets of instructions) need not be implemented as separate software programs, procedures, or modules, and thus various subsets of these modules may be combined or otherwise re-arranged in various implementations. In some implementations, the memory 214 stores a subset of the modules identified above. Furthermore, the memory 214 may store additional modules not described above (e.g., the operational protocols may include additional protocols not described herein).

Although Figure 2 shows a computing device 200 for a vehicle (e.g., configured for installation on-board a vehicle or configured for control of a vehicle), Figure 2 is intended more as a functional description of the various features that may be present rather than as a structural schematic of the implementations described herein. In practice, and as recognized by those of ordinary skill in the art, items shown separately could be combined and some items could be separated.

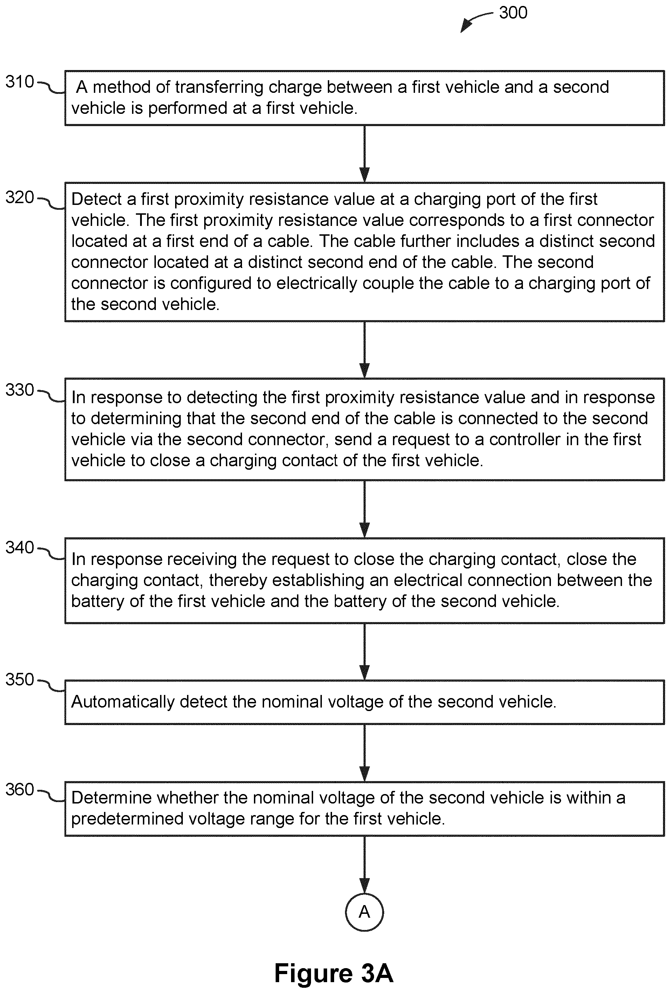

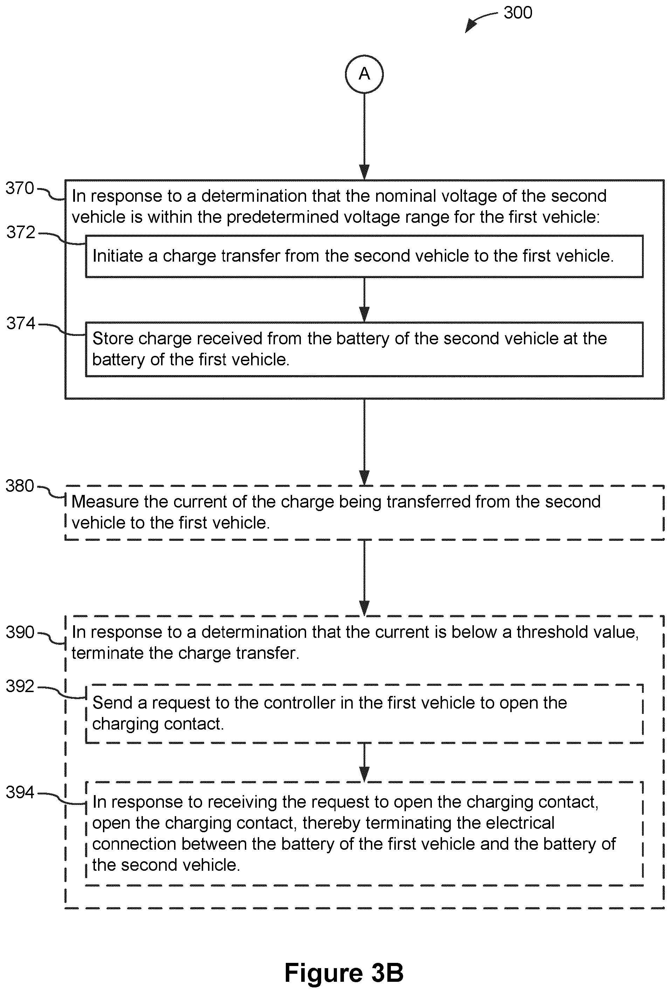

Figures 3A and 3B provide a flowchart of a method 300 for vehicle-to-vehicle charging in accordance with some implementations. The method 300 of transferring charge between a first vehicle 130-1 and a second vehicle 130-2 is performed (step 310) at a first vehicle 130-1. The method 300 includes detecting (step 320) a first proximity resistance value at a charging port 132-1 of the first vehicle 130-1. The first proximity resistance value corresponds to a first connector 120-1 (e.g., charge acceptor connector 120-1) located at a first end of a cable 110. The cable 110 also includes a distinct second connector 120-2 (e.g., charge donor connector 120-2) located at a distinct second end of the charging cable 110. The second connector 120-2 is configured to electrically couple the cable 110 to a charging port 132-2 of the second vehicle 130-2. The method 300 also includes, in response to detecting the first proximity resistance value and in response to determining that the second end of the cable 110 is connected to the second vehicle 130-2 via the second connector 120-2, sending (step 330) a request to a controller 160 in the first vehicle 130-1 to close a charging contact of the first vehicle 130-1. The method 300 also includes, in response to receiving the request (e.g., at the controller 160) to close the charging contact, closing (step 340) the charging contact, thereby establishing an electrical connection between the battery 150-1 of the first vehicle 130-1 and the battery 150-2 of the second vehicle 130-2. The method 300 also includes automatically (e.g., without human intervention or without additional user action) detecting (step 350) the nominal voltage of the second vehicle 130-2 (e.g., via the first connector 120-1) and determining (step 360) whether the nominal voltage of the second vehicle 130-2 is within a predetermined voltage range for the first vehicle 130-1. The method 300 also includes, in response to a determination (step 370) that the nominal voltage of the second vehicle 130-2 is within the predetermined voltage range for the first vehicle 130-1: initiating (step 372) a charge transfer from the second vehicle 130-2 to the first vehicle 130-1; and storing (step 374) charge received from the battery 150-2 of the second vehicle 130-2 at the battery 150-1 of the first vehicle 130-1.

In some implementations, the method 300 further includes measuring (step 380) the current of the charge being transferred from the second vehicle 130-2 to the first vehicle 130-1 and, in response to a determination that the current is below a threshold value, terminating (step 390) the charge transfer.

In some implementations, terminating (step 390) the charge transfer includes: sending (392) a request to the controller 160 in the first vehicle 130-1 to open the charging contact and, in response to receiving the request to open the charging contact, opening (step 394) the charging contact, thereby terminating the electrical connection between the battery 150-1 of the first vehicle 130-1 and the battery 150-2 of the second vehicle 130-2.

In some implementations, the method 300 includes turning off an isolation monitoring device (IMD) for the first vehicle 130-1 prior to closing the electrical contacts at the first vehicle 130-1.

In some implementations, the battery 150-2 of the second vehicle 130-2 is configured to enable the powertrain of the second vehicle 130-2.

In some implementations, the battery 150-1 of the first vehicle 130-1 is configured to enable the powertrain of the first vehicle 130-1.

In some implementations, the second connector 120-2 has a second proximity resistance value that is different from the first proximity resistance value, the first connector 120-1 is configured to establish an electrical connection with the charge acceptor vehicle 130-1, the second connector 120-2 is configured to establish an electrical connection with the charge donor vehicle 130-2, and the cable 110 is configured to transmit charge from the second end of the cable 110 to the first end of the cable 110 (e.g., from the second connector 120-2 to the first connector 120-1).

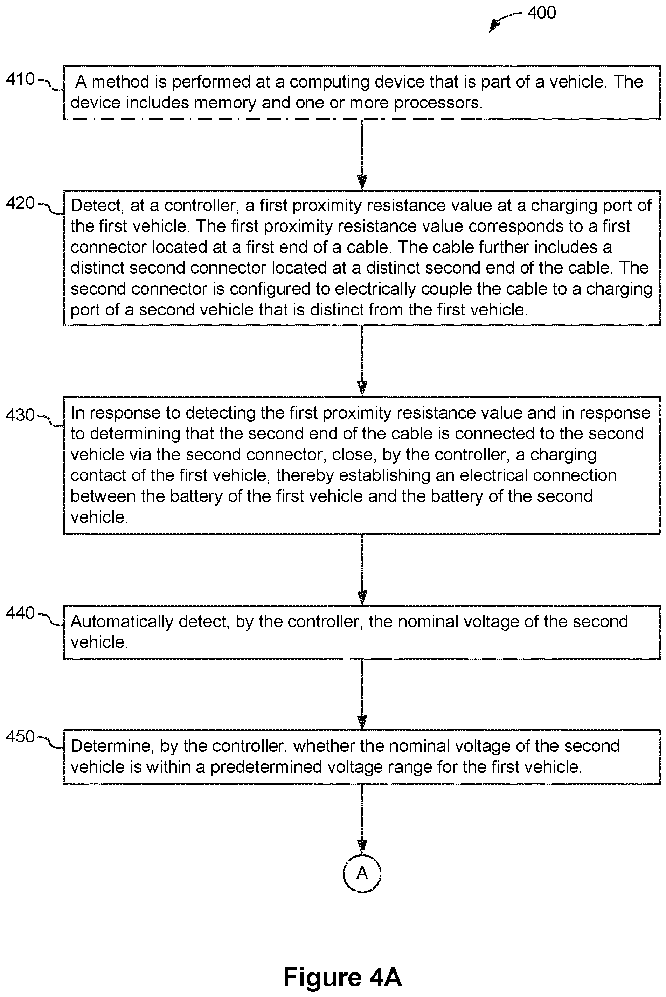

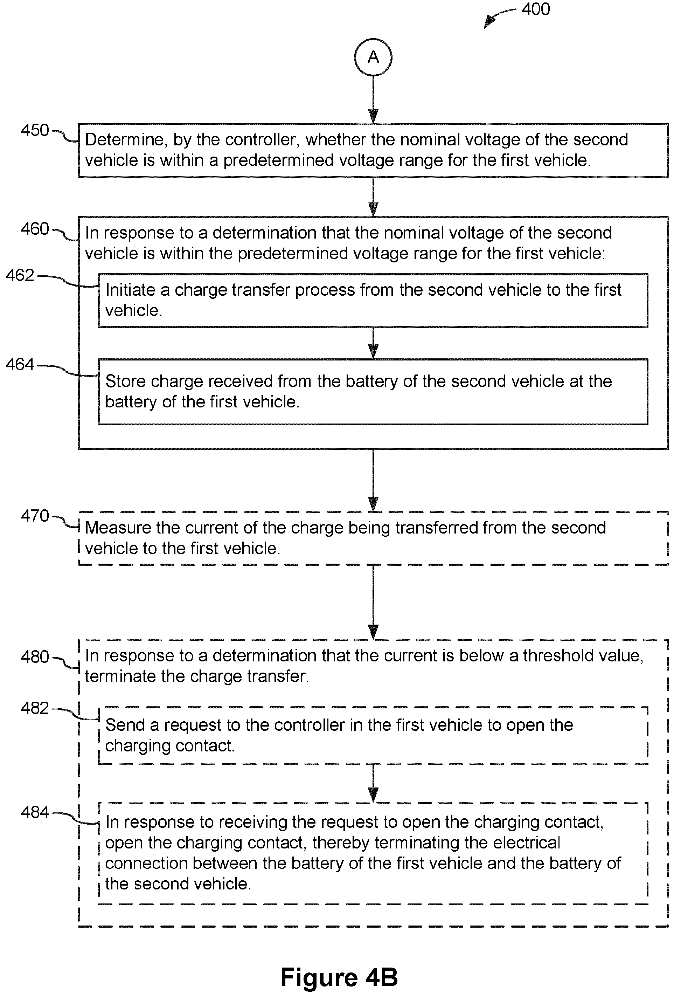

Figures 4A and 4B provide a flowchart of a method 400 for vehicle-to-vehicle charging in accordance with some implementations. The method 400 is performed (step 410) at a computing device that is part of a vehicle (e.g., computing device 200 that is mounted on-board vehicle 130-1). The computing device 200 includes memory 214 and one or more processors 202. The method 400 includes detecting (step 420) a first proximity resistance value at a charging port 132-1 of the first vehicle 130-1. The first proximity resistance value corresponds to a first connector 120-1 located at a first end of a cable 110. The cable 110 also includes a distinct second connector 120-2 located at a distinct second end of the charging cable 110. The second connector 120-2 is configured to electrically couple the cable 110 to a charging port 132-2 of the second vehicle 130-2. The method 400 also includes, in response to detecting the first proximity resistance value and in response to determining that the second end of the cable 110 is connected to the second vehicle 130-2 via the second connector 120-2, closing (step 430), by the controller 160, the charging contact, thereby establishing an electrical connection between the battery 150-1 of the first vehicle 130-1 and the battery 150-2 of the second vehicle 130-2. The method 400 also includes automatically (e.g., without human intervention or without additional user action) detecting (step 440), by the controller 160, the nominal voltage of the second vehicle 130-2 (e.g., via the first connector 120-1) and determining (step 450) whether the nominal voltage of the second vehicle 130-2 is within a predetermined voltage range for the first vehicle 130-1. The method 400 also includes, in response to a determination (step 460) that the nominal voltage of the second vehicle 130-2 is within the predetermined voltage range for the first vehicle 130-1: initiating (step 462) a charge transfer from the second vehicle 130-2 to the first vehicle 130-1; and storing (step 464) charge received from the battery 150-2 of the second vehicle 130-2 at the battery 150-1 of the first vehicle 130-1.

In some implementations, the method 400 further includes measuring (step 470) the current of the charge being transferred from the second vehicle 130-2 to the first vehicle 130-1 and in response to a determination that the current is below a threshold value, terminating (step 480) the charge transfer.

In some implementations, the terminating (step 480) the charge transfer includes: sending (step 482) a request to the controller 160 in the first vehicle 130-1 to open the charging contact and in response to receiving the request to open the charging contact, opening (step 484) the charging contact, thereby terminating the electrical connection between the battery 150-1 of the first vehicle 130-1 and the battery 150-2 of the second vehicle 130-2.

Turning now to some example implementations.

(A1) In one aspect, some implementations include a method for transferring charge between a first vehicle and a second vehicle. The method includes, at the first vehicle: detecting a first proximity resistance value at a charging port of the first vehicle. The first proximity resistance value corresponds to a first connector located at a first end of a cable. The cable includes a distinct second connector located at a distinct second end of the cable. The second connector is configured to electrically couple the cable to a charging port of the second vehicle. The method also includes, in response to detecting the first proximity resistance value and in response to determining that the second connector of the cable is connected to the second vehicle via the second connector, sending a request to a controller in the first vehicle to close a charging contact of the first vehicle. The method further includes, in response to receiving the request to close the charging contact, closing the charging contact, thereby establishing an electrical connection between the battery of the first vehicle and the battery of the second vehicle. The method also includes automatically detecting the nominal voltage of the second vehicle and determining whether the nominal voltage of the second vehicle is within a predetermined voltage range for the first vehicle. The method further includes, in response to a determination that the nominal voltage of the second vehicle is within the predetermined voltage range for the first vehicle: (i) initiating charge transfer from the second vehicle to the first vehicle, and (i) storing charge received from the battery of the second vehicle at the battery of the first vehicle.

(A2) The method of A1, further comprising measuring the current of the charge being transferred from the second vehicle to the first vehicle and, in response to a determination that the current is below a threshold value, terminating the charge transfer.

(A3) The method of A2, where terminating the charge transfer includes: (i) sending a request to the controller in the first vehicle to open the charging contact and (ii) in response to receiving the request to open the charging contact, opening the charging contact, thereby terminating the electrical connection between the battery of the first vehicle and the battery of the second vehicle.

(A4) The method of any of A1 - A3, where the battery of the second vehicle is configured to enable the powertrain of the second vehicle.

(A5) The method of any of A1 - A4, where the battery of the first vehicle is configured to enable the powertrain of the first vehicle.

(A6) The method of any of A1 - A5, where the second connector has a second proximity resistance value that is different from the first proximity resistance value, the first connector is configured to establish an electrical connection with a charge acceptor vehicle, the second connector is configured to establish an electrical connection with a charge donor vehicle, and the cable is configured to transmit charge from the second end of the cable to the first end of the cable.

(B1) A cable configured for transmitting charge between a first vehicle and a second vehicle includes a first connector at a first end of the cable and a second connector at a second end of the cable. The first connector has a first proximity resistance value and is configured to electrically couple the cable to a charging port of the first vehicle. The second connector has a second proximity resistance value that is different from the first proximity resistance value and is configured to electrically couple the cable to a charging port of the second vehicle. The first connector is configured to trigger a request to establish an electrical connection to a battery of the first vehicle in response to a determination that the second connector is plugged into a charging port of the second vehicle. The second connector is configured to automatically establish an electrical connection to a battery of the second vehicle in response to a determination that the second connector is plugged into a charging port of the second vehicle. The cable is configured to support charge transfer from the second end of the cable to the first end of the cable.

(B2) The cable of B1, where EV charging stations utilize a set of predefined proximity resistance values. Each of the first proximity resistance value and the second proximity resistance value is different from the predefined proximity resistance values, and the second proximity resistance value is different from the first proximity resistance value.

(B3) The cable of B1 or B2, where the first proximity resistance value is different from 100 ohms, 220 ohms, 680 ohms, and 1,500 ohms and the second proximity resistance value is different from 100 ohms, 220 ohms, 680 ohms, and 1,500 ohms.

(B4) The cable of any of B1 - B3, where the first connector is configured to establish an electrical connection to the battery of the first vehicle and the battery of the first vehicle is configured to enable the powertrain of the first vehicle.

(B5) The cable of any of B1 - B4, where the second connector is configured to establish an electrical connection to the battery of the second vehicle and the battery of the second vehicle is configured to enable the powertrain of the second vehicle.

(C1) A system configured for transmitting charge between charge donor vehicles and charge acceptor vehicles. The system comprises a charge acceptor vehicle, a charge donor vehicle that is distinct from the charge acceptor vehicle, and a cable that has a first connector at a first end of the cable and a second connector at a second end of the cable. The first connector is configured to trigger a request to establish an electrical connection with a battery of the charge acceptor vehicle in response to a determination that the second connector is plugged into a charging port of the charge donor vehicle. The second connector is configured to automatically establish an electrical connection to a battery of the charge donor vehicle in response to a determination that the second connector is plugged into a charging port of the charge donor vehicle. The cable is configured to support charge transfer from the battery of the charge donor vehicle to the battery of the charge acceptor vehicle.

(C2) The system of C1, where the first connector has a first proximity resistance value and the second connector has a second proximity resistance value that is different from the first proximity resistance value.

(C3) The system of C1 or C2, where EV charging stations utilize a set of predefined proximity resistance values. Each of the first proximity resistance value and the second proximity resistance value is different from the predefined proximity resistance values, and the second proximity resistance value is different from the first proximity resistance value.

(C4) The system of any of C1 - C3, where the first proximity resistance value is different from 100 ohms, 220 ohms, 680 ohms, and 1,500 ohms; and the second proximity resistance value is different from 100 ohms, 220 ohms, 680 ohms, and 1,500 ohms.

(C5) The system of any of C1 - C4, where the first connector is configured to provide an electrical connection to a battery of a first vehicle and the battery of the first vehicle is configured to enable a powertrain of the first vehicle.

(C6) The system of any of C1 - C5, where the second connector is configured to provide an electrical connection to a battery of a second vehicle and the battery of the second vehicle is configured to enable a powertrain of second vehicle.

(D1) A method is performed at a computing device that is part of a first vehicle. The computing device includes memory and one or more processors. The method comprises detecting, at a controller, a first proximity resistance value at a charging port of the first vehicle. The first proximity resistance value corresponds to a first connector located at a first end of a cable, the cable further includes a distinct second connector located at a distinct second end of the cable, and the second connector is configured to electrically couple the cable to a charging port of a second vehicle that is distinct from the first vehicle. The method also includes, in response to detecting the first proximity resistance value and in response to determining that the second connector of the cable is connected to the second vehicle via the second connector, closing, by the controller, a charging contact of the first vehicle, thereby establishing an electrical connection between the battery of the first vehicle and the battery of the second vehicle. The method further includes automatically detecting, by the controller, the nominal voltage of the second vehicle; and determining, by the controller, whether the nominal voltage of the second vehicle is within a predetermined voltage range for the first vehicle. The method also includes, in response to a determination that the nominal voltage of the second vehicle is within the predetermined voltage range for the first vehicle: (i) initiating a charge transfer process from the second vehicle to the first vehicle and (ii) storing charge received from the battery of the second vehicle at the battery of the first vehicle.

(D2) The method of D1, further comprising measuring the current of the charge being transferred from the second vehicle to the first vehicle and in response to a determination that the current is below a threshold value, terminating the charge transfer.

(D3) The method of D2, where terminating the charge transfer includes: (i) sending a request to the controller in the first vehicle to open the charging contact and (ii) in response to receiving the request to open the charging contact, opening the charging contact, thereby terminating the electrical connection between the battery of the first vehicle and the battery of the second vehicle.

(D4) The method of any of D1 - D3, where the battery of the charge donor vehicle is configured to enable the powertrain of the charge donor vehicle.

(D5) The method of any of D1 - D4, where the battery of the charge acceptor vehicle is configured to enable the powertrain of the charge acceptor vehicle.

(D6) The method of any of D1 - D5, where the second connector has a second proximity resistance value that is different from the first proximity resistance value, the first connector is configured to establish an electrical connection with a charge acceptor vehicle, the second connector is configured to establish an electrical connection with a charge donor vehicle, and the cable is configured to transmit charge from the second end of the cable to the first end of the cable.

(E1) A computing device that is part of a first vehicle. The computing device comprises one or more processors, memory, and one or more programs stored in the memory and configured for execution by the one or more processors. The one or more programs comprise instructions for detecting, at a controller, a first proximity resistance value at a charging port of the first vehicle. The first proximity resistance value corresponds to a first connector located at a first end of a cable, the cable further includes a distinct second connector located at a distinct second end of the cable, and the second connector is configured to electrically couple the cable to a charging port of a second vehicle that is distinct from the first vehicle. The method also includes, in response to detecting the first proximity resistance value and in response to determining that the second connector of the cable is connected to the second vehicle via the second connector, closing, by the controller, a charging contact of the first vehicle thereby establishing an electrical connection between a battery of the first vehicle and a battery of the second vehicle. The method further includes automatically detecting, by the controller, a nominal voltage of the second vehicle; and determining, by the controller, whether the nominal voltage of the second vehicle is within a predetermined voltage range for the first vehicle. The method also includes, in response to a determination that the nominal voltage of the second vehicle is within the predetermined voltage range for the first vehicle: (i) initiating a charge transfer process from the second vehicle to the first vehicle and (ii) storing charge received from the battery of the second vehicle at the battery of the first vehicle.

(E2) The computing device of E1, further comprising measuring a current of the charge being transferred from the second vehicle to the first vehicle and in response to a determination that the current is below a threshold value, terminating the charge transfer.

(E3) The computing device of E2, where terminating the charge transfer includes: (i) sending a request to the controller in the first vehicle to open the charging contact and (ii) in response to receiving the request to open the charging contact, opening the charging contact thereby terminating the electrical connection between the battery of the first vehicle and the battery of the second vehicle.

(E4) The computing device of any of E1 - E3, where the battery of the charge donor vehicle is configured to enable the powertrain of the charge donor vehicle.

(E5) The computing device of any of E1 - E4, where the battery of the charge acceptor vehicle is configured to enable the powertrain of the charge acceptor vehicle.

(E6) The computing device of any of E1 - E5, where the second connector has a second proximity resistance value that is different from the first proximity resistance value, the first connector is configured to establish an electrical connection with a charge acceptor vehicle, the second connector is configured to establish an electrical connection with a charge donor vehicle, and the cable is configured to transmit charge from the second end of the cable to the first end of the cable.

(F1) A non-transitory computer-readable storage medium storing one or more programs configured for execution by a computing device that is part of a first vehicle. The computing device includes one or more processors and memory, and the one or more programs include instructions for detecting, at a controller, a first proximity resistance value at a charging port of the first vehicle. The first proximity resistance value corresponds to a first connector located at a first end of a cable, the cable further includes a distinct second connector located at a distinct second end of the cable, and the second connector is configured to electrically couple the cable to a charging port of a second vehicle that is distinct from the first vehicle. The one or more programs also include instructions for, in response to detecting the first proximity resistance value and in response to determining that the second connector of the cable is connected to the second vehicle via the second connector, closing, by the controller, a charging contact of the first vehicle thereby establishing an electrical connection between a battery of the first vehicle and a battery of the second vehicle. The one or more programs further include instructions for automatically detecting, by the controller, a nominal voltage of the second vehicle; and determining, by the controller, whether the nominal voltage of the second vehicle is within a predetermined voltage range for the first vehicle. The one or more programs also include instructions for, in response to a determination that the nominal voltage of the second vehicle is within the predetermined voltage range for the first vehicle: (i) initiating a charge transfer process from the second vehicle to the first vehicle and (ii) storing charge received from the battery of the second vehicle at the battery of the first vehicle.

(F2) The non-transitory computer-readable storage medium of F1, further comprising measuring a current of the charge being transferred from the second vehicle to the first vehicle and in response to a determination that the current is below a threshold value, terminating the charge transfer.

(F3) The non-transitory computer-readable storage medium of F2, where terminating the charge transfer includes: (i) sending a request to the controller in the first vehicle to open the charging contact and (ii) in response to receiving the request to open the charging contact, opening the charging contact thereby terminating the electrical connection between the battery of the first vehicle and the battery of the second vehicle.

(F4) The non-transitory computer-readable storage medium of any of F1 - F3, where the battery of the charge donor vehicle is configured to enable the powertrain of the charge donor vehicle.

(F5) The non-transitory computer-readable storage medium of any of F1 - F4, where the battery of the charge acceptor vehicle is configured to enable the powertrain of the charge acceptor vehicle.

(F6) The non-transitory computer-readable storage medium of any of F1 - F5, where the second connector has a second proximity resistance value that is different from the first proximity resistance value, the first connector is configured to establish an electrical connection with a charge acceptor vehicle, the second connector is configured to establish an electrical connection with a charge donor vehicle, and the cable is configured to transmit charge from the second end of the cable to the first end of the cable.

The terminology used in the description of the invention herein is for the purpose of describing particular implementations only and is not intended to be limiting of the invention. As used in the description of the invention and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, steps, operations, elements, and/or components, but do not preclude the presence or addition of one or more other features, steps, operations, elements, components, and/or groups thereof.

The foregoing description, for purpose of explanation, has been described with reference to specific implementations. However, the illustrative discussions above are not intended to be exhaustive or to limit the invention to the precise forms disclosed. Many modifications and variations are possible in view of the above teachings. The implementations were chosen and described in order to best explain the principles of the invention and its practical applications, to thereby enable others skilled in the art to best utilize the invention and various implementations with various modifications as are suited to the particular use contemplated.

## Claims

1. A method of transferring charge between a first vehicle and a second vehicle, the method comprising:
at the first vehicle:
detecting a first proximity resistance value at a charging port of the first vehicle, wherein:
the first proximity resistance value corresponds to a first connector located at a first end of a cable;
the cable further includes a distinct second connector located at a distinct second end of the cable; and
the second connector is configured to electrically couple the cable to a charging port of the second vehicle;
in response to detecting the first proximity resistance value and in response to determining that the second end of the cable is connected to the second vehicle via the second connector, sending a request to a controller in the first vehicle to close a charging contact of the first vehicle;
in response receiving the request to close the charging contact, closing the charging contact, thereby establishing an electrical connection between a battery of the first vehicle and a battery of the second vehicle;
automatically detecting a nominal voltage of the second vehicle;
determining whether the nominal voltage of the second vehicle is within a predetermined voltage range for the first vehicle; and
in response to a determination that the nominal voltage of the second vehicle is within the predetermined voltage range for the first vehicle:
initiating charge transfer from the second vehicle to the first vehicle; and
storing charge received from the battery of the second vehicle at the battery of the first vehicle.

2. The method of claim 1, further comprising:
measuring a current of the charge being transferred from the second vehicle to the first vehicle; and
in response to a determination that the current is below a threshold value, terminating the charge transfer.

3. The method of claim 2, wherein terminating the charge transfer includes:
sending a request to the controller in the first vehicle to open the charging contact; and
in response to receiving the request to open the charging contact, opening the charging contact, thereby terminating the electrical connection between the battery of the first vehicle and the battery of the second vehicle.

4. The method of any of claims 1 - 3, wherein the battery of the second vehicle is configured to enable a powertrain of the second vehicle.

5. The method of any of claims 1 -4, wherein the battery of the first vehicle is configured to enable a powertrain of the first vehicle.

6. The method of any of claims 1 - 5, wherein:
the second connector has a second proximity resistance value that is different from the first proximity resistance value;
the first connector is configured to establish an electrical connection with a charge acceptor vehicle;
the second connector is configured to establish an electrical connection with a charge donor vehicle; and
the cable is configured to transmit charge from the second end of the cable to the first end of the cable.

7. A cable configured for transmitting charge between a first vehicle and a second vehicle, the cable comprising:
a first connector at a first end of the cable; and
a second connector at a second end of the cable, wherein:
the first connector has a first proximity resistance value and is configured to electrically couple the cable to a charging port of the first vehicle;
the second connector has a second proximity resistance value that is different from the first proximity resistance value and the second connector is configured to electrically couple the cable to a charging port of the second vehicle;
the first connector is configured to trigger a request to establish an electrical connection to a battery of the first vehicle in response to a determination that the second connector is plugged into a charging port of the second vehicle;
the second connector is configured to automatically establish an electrical connection to a battery of the second vehicle in response to a determination that the second connector is plugged into a charging port of the second vehicle; and
the cable is configured to support charge transfer from the second end of the cable to the first end of the cable.

8. The cable of claim 7, wherein:
EV charging stations utilize a set of predefined proximity resistance values;
each of the first proximity resistance value and the second proximity resistance value is different from the predefined proximity resistance values; and
the second proximity resistance value is different from the first proximity resistance value.

9. The cable of any of claims 7 and 8, wherein:
the first proximity resistance value is different from 100 ohms, 220 ohms, 680 ohms, and 1,500 ohms; and
the second proximity resistance value is different from 100 ohms, 220 ohms, 680 ohms, and 1,500 ohms.

10. The cable of any of claims 7 - 9, wherein:
the first connector is configured to provide an electrical connection to a battery of a first vehicle; and
the battery of the first vehicle is configured to enable a powertrain of the first vehicle.

11. The cable of any of claims 7 - 10, wherein:
the second connector is configured to provide an electrical connection to a battery of a second vehicle; and
the battery of the second vehicle is configured to enable a powertrain of the second vehicle.

12. A system configured for transmitting charge between charge donor vehicles and charge acceptor vehicles, the system comprising:
a charge acceptor vehicle;
a charge donor vehicle that is distinct from the charge acceptor vehicle; and
a cable having a first connector at a first end of the cable and a second connector at a second end of the cable, wherein:
the first connector is configured to trigger a request to establish an electrical connection with a battery of the charge acceptor vehicle in response to a determination that the second connector is plugged into a charging port of the charge donor vehicle;
the second connector is configured to automatically establish an electrical connection to a battery of the charge donor vehicle in response to a determination that the second connector is plugged into a charging port of the charge donor vehicle; and
the cable is configured to support charge transfer from the battery of the charge donor vehicle to the battery of the charge acceptor vehicle.

13. The system of claim 12, wherein:
the first connector has a first proximity resistance value; and
the second connector has a second proximity resistance value that is different from the first proximity resistance value.

14. The system of any of claims 12 and 13, wherein the battery of the charge acceptor vehicle is configured to enable a powertrain of the charge acceptor vehicle.

15. The system of any of claims 12 - 14, wherein the battery of the charge donor vehicle is configured to enable a powertrain of the charge donor vehicle.
